Europäisches Patentamt

European Patent Office

Office européen des brevets

(11) Numéro de publication: **0 397 569**

**A1**

(12) **DEMANDE DE BREVET EUROPEEN**

(21) Numéro de dépôt: 90401239.0

(22) Date de dépôt: **10.05.90**

(51) Int. Cl.5: **H01S 3/086**

(30) Priorité: **12.05.89 FR 8906257**

(43) Date de publication de la demande:
**14.11.90 Bulletin 90/46**

(84) Etats contractants désignés:
**DE GB NL**

(71) Demandeur: **SAT (SOCIETE ANONYME DE TELECOMMUNICATIONS) Société Anonyme française**
**41, rue Cantagrel**
**F-75631 Paris Cédex 13(FR)**

(72) Inventeur: **Ouhayoun,Michel**
**72 Boulevard de la Villette**
**F-75019 Paris(FR)**

(74) Mandataire: **Bloch, Gérard et al**
**2, square de l'Avenue du Bois**
**F-75116 Paris(FR)**

(54) **Procédé d'alignement d'un laser infra-rouge pourvu d'un réseau réflecteur.**

(57) On dirige le faisceau (25) d'un laser (2) émettant dans le visible suivant un axe traversant la cavité (10) du laser infra-rouge (1) à aligner, ainsi que le réseau réflecteur (11) disposé à une extrémité de cette cavité (10) et une lame semi-réfléchissante (12) disposée à l'autre extrémité. On mesure l'angle ($\alpha_{16m}$) entre le faisceau visible incident (25) et celui réfléchi par le réseau (11). On calcule l'erreur d'orientation ($d\theta_i$) du réseau (11) en réponse à l'angle mesuré ($\alpha_{16m}$) et on oriente la lame (12) pour qu'elle s'écarte de son orientation idéale d'un angle égal à l'erreur d'orientation ($d\theta_i$), en s'aidant du faisceau visible ($25'$) qu'elle réfléchit.

L'invention s'applique notamment aux lasers à $CO_2$.

EP 0 397 569 A1

FIG.3a

FIG.3b

La présente invention a pour objet un procédé d'alignement d'un laser infra-rouge pourvu d'une cavité renfermant un milieu excitable et des moyens réflecteurs disposés de part et d'autre de ladite cavité, procédé dans lequel on dirige le faisceau d'un autre laser, émettant dans le visible, suivant un axe traversant ladite cavité et lesdits moyens réflecteurs, et on règle l'orientation desdits moyens réflecteurs en s'aidant des faisceaux visibles qu'ils réfléchissent alors.

On connaît déjà un procédé du type défini ci-dessus qui donne satisfaction dans le cas où les moyens réflecteurs du laser à fabriquer sont l'un un miroir parfait, et l'autre une lame semi-réfléchissante pour laisser sortir le faisceau laser. Dans ce cas, en effet, il suffit d'orienter les moyens réflecteurs pour qu'ils réfléchissent sur lui-même le faisceau du laser visible.

Cependant, le procédé ci-dessus ne convient pas dans le cas d'un laser monochromatique pour lequel on dispose, à une extrémité, au lieu d'un miroir parfait, un réseau optique réflecteur, par exemple une plaque métallique sur laquelle sont gravés des traits parallèles et équidistants. Dans ce cas, en effet, du fait que les propriétés réfléchissantes du réseau dépendent de la longueur d'onde du rayonnement incident, il n'est pas possible de l'orienter directement, à l'aide du faisceau du laser visible, de façon convenable pour le rayonnement infra-rouge, et il faut procéder par tâtonnements.

Or des lasers infra-rouge équipés d'un réseau, et notamment des lasers à $CO_2$ sont utilisés dans des systèmes à détection cohérente pour toutes les applications où le contenu spectral du rayonnement doit être très pur, du fait que le réseau réflecteur produit un filtrage fréquentiel du rayonnement laser.

La demande PCT WO-A-8 707 093 décrit un procédé d'alignement pour laser à $CO_2$ comprenant un réseau, procédé qui met en oeuvre un laser visible He Ne. Cependant, le réseau du laser à $CO_2$ dont il s'agit est un réseau mobile, de façon à ce que le laser à $CO_2$ soit accordable en longueur d'onde. Le problème résolu par le procédé décrit dans le document WO-A-8 707 093 est donc relatif à l'orientation de l'axe de rotation du réseau, pour que l'alignement de ce réseau reste correct pour une plage de valeurs de l'angle $\theta$ de rotation du réseau autour de cet axe. Ce procédé met donc en oeuvre un nombre relativement grand d'étapes, effectuées alternativement pour deux positions du réseau correspondant à deux valeurs $\theta_0$ et $\theta_1$ de l'angle $\theta$, $\theta_0$ et $\theta_1$ étant choisies chacune aux extrémités de la plage à l'intérieur de laquelle l'alignement doit rester correct, par rapport à l'autre miroir monté fixe.

Dans la présente invention, le laser à $CO_2$ peut être pourvu d'un réseau fixe, et il n'est donc pas envisageable de lui appliquer le procédé décrit dans la demande WO-A-8 707 093, par ailleurs relativement complexe.

La présente invention pallie les inconvénients du procédé par tâtonnements dans le cas des lasers infra-rouge équipés d'un réseau.

A cet effet, elle a pour objet un procédé du type défini ci-dessus, caractérisé par le fait que, les moyens réflecteurs disposés d'un côté de la cavité étant un réseau optique prévu pour réfléchir sensiblement sur lui-même et selon l'ordre de rang 1 le rayonnement infra-rouge du laser à aligner :
- on mesure la valeur de l'angle entre le faisceau du laser visible incident sur ledit réseau et le faisceau visible réfléchi selon l'un des ordres N et $N + 1$ qui en résulte, N étant la partie entière du quotient de la longueur d'onde du laser à aligner par la longueur d'onde du laser visible,
- on calcule, en réponse à la valeur mesurée, la valeur d'un angle représentant l'erreur d'orientation du réseau par rapport à son orientation idéale, et,
- on oriente les moyens réflecteurs disposés du côté de la cavité opposé au réseau pour qu'ils s'écartent de leur orientation idéale d'un angle de valeur égale à celle représentant ladite erreur d'orientation, en s'aidant du faisceau visible qu'ils réfléchissent.

Le procédé de l'invention présente notamment deux avantages importants. Le premier est que, contrairement aux procédés de l'art antérieur, il ne nécessite aucun tâtonnement, ce qui permet un gain de temps appréciable. Le deuxième est qu'il permet d'aboutir à coup sûr à un laser infra-rouge qui oscille même lorsque l'orientation du réseau n'est pas rigoureusement égale à l'orientation idéale relativement au faisceau incident du laser visible. Ceci permet de se passer du dispositif permettant, en cours d'alignement, de retoucher l'orientation du réseau par rapport à la cavité, dispositif qui est indispensable avec les procédés de l'art antérieur. Ainsi, lorsque l'on prévoit d'aligner le laser avec le procédé de l'invention, il est possible, avant l'opération d'alignement, de rendre définitivement solidaire le réseau de la cavité, dans une position aussi proche que possible, évidemment, de sa position idéale, mais qui n'a plus à être retouchée, même si elle n'est pas parfaite, au cours de l'opération d'alignement. Il en résulte une réduction du coût de fabrication d'un tel laser, dans la mesure où un dispositif permettant de retoucher l'orientation d'un réflecteur, comportant par exemple des vis de réglages, est d'un prix de revient relativement élevé.

Ce résultat remarquable a été obtenu par la demanderesse car elle n'a pas cherché par tout moyen, comme dans les procédés de l'art antérieur, à faire coïncider l'axe d'alignement du laser infra-rouge avec l'axe du faisceau du laser visible.

Dans la présente invention, au contraire, c'est en acceptant une légère différence entre l'axe d'alignement du laser infra-rouge et l'axe du faisceau visible que l'on aboutit à une solution rapide et efficace.

Avantageusement, pour mesurer la valeur de l'angle entre le faisceau du laser visible incident sur ledit réseau et le faisceau réfléchi qui en résulte, on mesure l'abcisse du point d'impact du faisceau réfléchi sur une règlette perpendiculaire au faisceau incident disposée à distance de la cavité, et, pour orienter lesdits moyens réflecteurs disposés du côté de la cavité opposé au réseau, on amène le point d'impact, sur ladite règlette, du faisceau visible qu'ils réfléchissent, en un point de ladite réglette dont l'abcisse est déterminée en réponse à ladite abcisse mesurée.

Dans ce cas, l'opération d'alignement est particulièrement simple et rapide, surtout si la règlette est graduée à la manière d'un abaque sur lequel on localise immmédiatement, en réponse à la position du point d'impact du faisceau visible réfléchi par le réseau, celle à laquelle il faut amener le point d'impact du faisceau visible réfléchi par les moyens réflecteurs disposés du côté de la cavité opposé au réseau, moyens réflecteurs qui sont, par exemple, une lame semi-réfléchissante.

La présente invention sera mieux comprise à l'aide de la description suivante de la mise en oeuvre préférée du procédé de l'invention, faite en se référant aux dessins annexés, sur lesquels :

- la fig. 1 représente, de façon schématique, un laser infra-rouge à réseau optique,

- la fig. 2 représente un laser infra-rouge du type de celui de la figure 1 en cours d'alignement, selon le procédé de l'art antérieur,

- les figures 3a et 3b représentent les deux étapes de l'alignement du laser de la fig. 1 selon le procédé de l'invention.

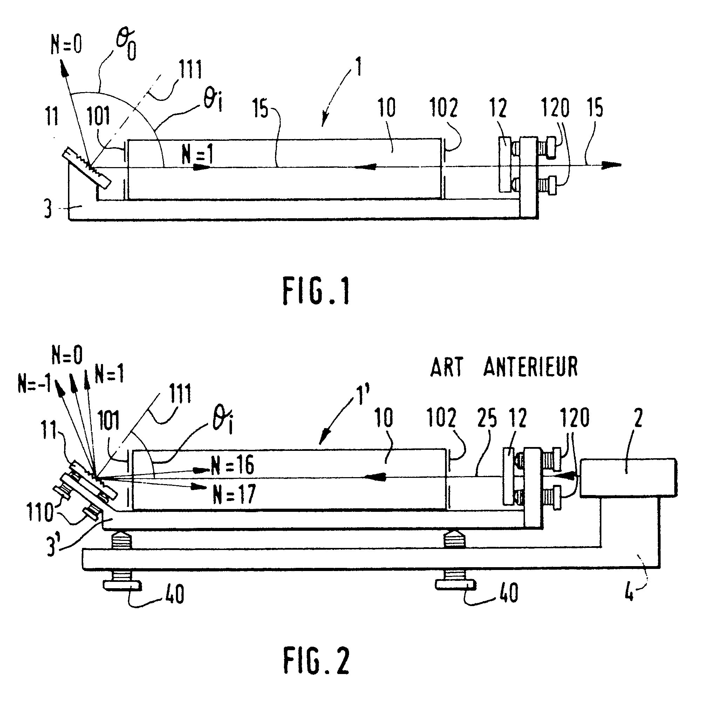

En se référant à la figure 1, la structure et le fonctionnement d'un laser infra-rouge à réseau optique, que l'on peut aligner selon le procédé de l'invention, sont tout d'abord décrits.

Le laser 1 comprend, de façon connue, une cavité 10, renfermant un milieu, en l'occurrence du gaz carbonique $CO_2$, excitable par des moyens non représentés car connus. A une extrémité de la cavité 10 est disposée, ici, une lame semi-réfléchissante 12, et à l'autre extrémité un réseau optique 11. La lame semi-réfléchissante 12 et le réseau optique 11 sont, de façon connue, prévus pour réfléchir le rayonnement infra-rouge prenant naissance au sein du milieu contenu dans la cavité 10, lorsqu'il est excité, de façon à engendrer des oscillations produisant un faisceau laser 15, sortant par la lame 12.

Le réseau optique 11 est ici une plaque métallique sur laquelle sont gravés des traits parallèles, équidistants et ici perpendiculaires au plan de la figure. Le nombre n de traits par millimètre, inverse du pas du réseau, vaut par exemple :

$$n = 150 \quad (1)$$

De façon connue, un réseau optique comme le réseau 11, qui reçoit un rayonnement monochromatique dans une certaine direction d'incidence, réfléchit ce rayonnement en donnant naissance à des interférences constructives dans une pluralité de directions. En d'autres termes, il donne naissance à une pluralité de rayonnement réfléchis.

Ainsi, si $\lambda_i$ est la longueur d'onde du rayonnement incident sous un angle $\theta_i$, angle mesuré, comme le montre la figure 1, par rapport à la normale 111 au réseau 11, les angles $\theta_N$, mesurés par rapport à la normale 111, des directions des divers rayonnements réfléchis sont donnés par la relation suivante :

$$\sin \theta_i + \sin \theta_N = n\,N\,\lambda_i \quad (2)$$

relation dans laquelle N est un nombre entier quelconque, positif ou négatif. On peut dire que la réflexion dans la direction d'angle $\theta_N$ se fait selon l'"ordre" de rang N.

La relation (2) montre que, d'une part, la réflexion selon l'ordre de rang O a toujours lieu dans la direction $\theta_O = -\theta_i$ qui serait celle en l'absence de traits sur le réseau, et que d'autre part, lorsque $\theta_i$, n et $\lambda_i$ sont fixes, l'angle $\theta_N$ n'est réel que tant que N n'est pas trop grand en valeur absolue. Ainsi, il n'y a donc un nombre fini de valeurs réelles pour l'angle $\theta_N$. Dans le cas de la figure 1, seules les valeurs N = 0 et N = 1 correspondent à des faisceaux réels.

Par ailleurs, la relation (2) montre que, lorsque $\theta_i$, n et N sont fixés, l'angle $\theta_N$ dépend de $\lambda_i$. Cette propriété est mise à profit dans le laser 1 pour sélectionner une des longueurs d'onde dans le spectre de longueurs d'onde des rayonnements émis par le milieu contenu dans la cavité 10, lorsqu'il est excité. En effet, l'oscillation laser ne prend naissance que si le rayonnement infra-rouge incident sur le réseau 11 se trouve réfléchi sur lui-même. C'est-à-dire si :

$$\theta_N = \theta_i \quad (3)$$

Le rapprochement des relations (2) et (3) montre que, lorsque $\theta_i$, n et N sont fixés, cette condition ne se produit que si la longueur d'onde $\lambda_i$ vérifie la relation :

$$2 \sin \theta_i = n\,N\,\lambda_i \quad (4)$$

En pratique, on choisit généralement N = 1, et des valeurs de $\theta_i$ et de n telles que le laser oscille avec la longueur d'onde souhaitée, en général celle de la raie d'émission du gaz carbonique la plus intense, qui correspond ici à une longueur d'onde $\lambda_{IR}$ valant :

$$\lambda_{IR} = 10,59 \text{ microns} \quad (5)$$

A titre d'exemple, et pour la valeur de n = 150 déjà mentionnée, le rayonnement de longueur

d'onde $\lambda_{IR}$ = 10,59 microns est réfléchi sur lui-même selon l'ordre de rang N = 1 si :

$$\theta_i = 52,58 \text{ degrés} \qquad (6)$$

En pratique, lors de la réalisation du laser 1, la longueur d'onde $\lambda_{IR}$ étant imposée par le milieu contenu dans la cavité, le réseau étant gravé avec n traits par millimètres, et l'ordre de la réflexion étant choisi, il est nécessaire d'ajuster expérimentalement la valeur de l'angle d'incidence $\theta_i$ autour de sa valeur calculée d'après la relation (4), en orientant le réseau optique 11. De même, il est nécessaire d'ajuster expérimentalement la position de la lame 12 pour qu'elle soit, en principe, bien perpendiculaire à l'axe d'alignement suivant duquel le faisceau 15 se développe lorsque le laser oscille. Ces ajustements ou réglages sont en général appelés réglages d'alignement.

Il est évidemment très pratique et bien connu d'effectuer ces réglages d'alignement en utilisant le faisceau d'un laser auxiliaire, émettant dans le visible, faisceau que l'on oriente suivant l'axe d'alignement que l'on prévoit pour le laser infra-rouge.

Lorsque les propriétés réfléchissantes du réflecteur à orienter sont indépendantes de la longueur d'onde, comme cela est le cas pour la lame 12, la direction du faisceau visible réfléchi par le réflecteur à orienter renseigne immédiatement sur l'orientation à donner au réflecteur, la bonne orientation étant obtenue lorsque le faisceau visible est réfléchi sur lui-même, c'est-à-dire que les directions d'incidence et de réflexion sont les mêmes.

Par contre, lorsque les propriétés réfléchissantes du réflecteur à orienter dépendent de la longueur d'onde, et tel est le cas pour le réseau 11, on ne peut procéder aussi simplement, et on doit procéder par tâtonnements, comme cela est maintenant décrit en référence à la figure 2. Sur cette figure, on a représenté, à titre d'exemple, un laser 1' infra-rouge à gaz carbonique équipé du réseau 11, en cours de réglage d'alignement selon un procédé de l'art antérieur, à l'aide d'un laser hélium-néon HeNe émettant dans le rouge, représenté schématiquement sous la référence 2.

Pour aligner le laser 1', on commence par repérer l'axe mécanique de la cavité 10, ici sensiblement cylindrique, et on équipe ses deux extrémités de diaphragmes 101 et 102, centrés sur cet axe mécanique. Le diaphragme 101 est disposé du côté du réseau 11, tandis que le diaphragme 102 est disposé du côté de la lame semi-réfléchissante 12.

On dispose la cavité 10 sur un support 3', qui supporte également, à une des extrémités de la cavité 10, le réseau optique 11, et à l'autre extrémité, la lame semi-réfléchissante 12. Le réseau 11 et la lame 12, coupés par l'axe d'alignement, sont orientables par rapport au support 3' grâce à des vis de réglage 110 et 120 respectivement.

Le support 3' est orientable par rapport à un support 4 sur lequel est monté le laser 2, grâce à des vis de réglage 40.

Pour procéder aux réglages d'alignement, on met sous tension le laser 2, qui engendre un faisceau 25. Sans exciter le milieu contenu dans la cavité 10, on oriente alors, grâce aux vis 40, le support 3', donc la cavité 10, pour que le faisceau 25 du laser 2 soit confondu avec l'axe mécanique de la cavité 10, grâce aux diaphragmes 101 et 102.

On oriente ensuite, grâce aux vis 110, le réseau 11 pour que l'angle d'incidence $\theta_i$ du faisceau 25 soit proche de la valeur calculée pour que la longueur d'onde infra-rouge $\lambda_{IR}$ satisfasse la relation (4), soit ici et par exemple la valeur 52,58 degrés déjà mentionnée dans la relation (6).

Cependant, on constate alors que, parmi le grand nombre de faisceaux visibles réfléchis, grand nombre lié au fait que la longueur d'onde visible rouge $\lambda_{VR}$ = 0,63 microns est petite par rapport au pas du réseau 11, aucun n'est réfléchi dans la direction du faisceau incident 25.

Ceci peut d'ailleurs être vérifié à l'aide de la relation (2). En effet, lorsque, dans cette relation, on choisit $\theta_i$ = 52,58 degrés, n = 150 et $\lambda_i = \lambda_{VR}$ = 0,63 microns, on constate que les directions des deux faisceaux visibles réfléchis selon l'ordre de rang N = 16 et selon l'ordre de rang N = 17 sont situées de part et d'autre de la direction du faisceau visible incident 25, comme cela est représenté sur la figure 2.

Expérimentalement, l'utilisation du laser HeNe 2 ne permet donc que de s'assurer que l'orientation du réseau 11 est bien telle que les faisceaux réfléchis d'ordre de rang 16 et 17 encadrent le faisceau incident 25. Comme il existe en fait une plage d'orientations remplissant la condition précédente, le réglage expérimental ne peut être qu'approximatif, d'autant plus que la présence des diaphragmes 101 et 102 a tendance à empêcher le passage des faisceaux réfléchis d'ordre de 16 et 17, qui, non portés par l'axe d'alignement, produisent des impacts excentrés, surtout au niveau du diaphragme 102 disposé du côté du laser 2.

Après avoir ainsi orienté, approximativement, le réflecteur 11, on oriente la lame semi-réfléchissante 12 de façon connue, ce qui ne pose pas de problème particulier puisque ses propriétés réfléchissantes sont indépendantes de la longueur d'onde.

On supprime ensuite le laser 2, que l'on remplace par un détecteur infra-rouge, on excite le milieu contenu dans la cavité 10, et on retouche l'orientation du réseau 11, au hasard, jusqu'à ce que les oscillations laser infra-rouge prennent naissance, ce qui est indiqué par le détecteur infra-rouge. On immobilise alors la lame 12 et le réseau 11 ainsi orientés.

On constate donc qu'avec le procédé de l'art antérieur, des tâtonnements sont nécessaires.

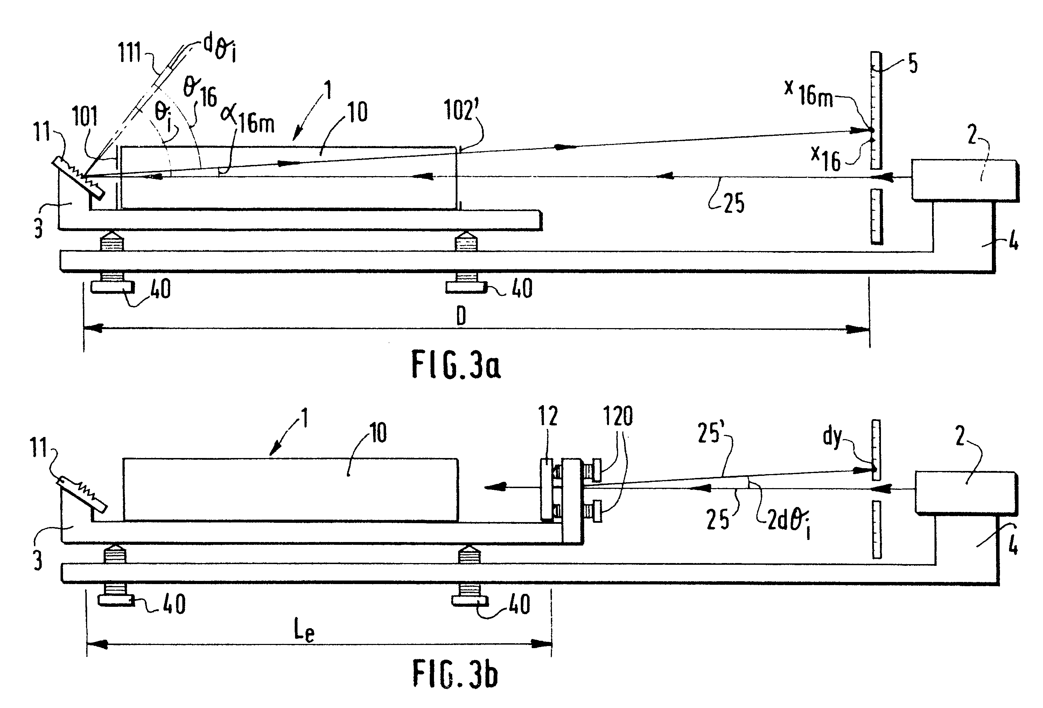

Avec le procédé de l'invention qui va maintenant être décrit en référence aux figures 3a et 3b, il n'est pas nécessaire de prévoir des vis de réglage de l'orientation du réseau 11 par rapport à la cavité 10, et, comme cela est représenté sur ces figures, le support 3 et le réseau du laser infra-rouge 1 à aligner sont rendus définitivement solidaires avant l'opération d'alignement du laser 1. Comme cela a déjà été signalé, ceci est un des avantages de l'invention, car la suppression des vis 110 de réglage de l'orientation du réseau 11, vis qui étaient absolument nécessaires dans le laser 1' aligné par le procédé de l'art antérieur, réduit le coût de fabrication du laser 1.

Naturellement, et comme cela est évident pour l'homme du métier, la position relative dans laquelle sont solidarisés la cavité 10 et le réseau optique 11 est telle que l'angle entre l'axe mécanique de la cavité 10 et le réseau 11 est aussi proche que possible de sa valeur idéale, c'est-à-dire celle de l'angle entre le faisceau infra-rouge et le réseau 11 lorsque le laser infra-rouge oscille, soit ici et par exemple le complément de la valeur déjà calculée de 52,58 degrés.

Pour aligner le laser 1 selon le procédé de l'invention, on dirige le faisceau du laser 2 selon l'axe mécanique de la cavité 10, repéré par les diaphragmes 101 et 102, en s'aidant ici des vis 40, comme pour le laser 1' dans le procédé de l'art antérieur. On notera toutefois que, pour des raisons qui apparaîtront mieux dans la suite, on dispose ici le laser 2 à distance du laser 1.

Ensuite, au cours d'une étape représentée sur la figure 3a, et après avoir remplacé le diaphragme 102 par un diaphragme 102' d'ouverture plus large, on mesure la valeur $\alpha_{16m}$ de l'angle entre le faisceau 25 incident sur le réseau 11 et le faisceau visible réfléchi selon l'ordre 16 qui en résulte, la lame 12 n'étant pas mise en place. Ici, pour faire cette mesure, on mesure l'abcisse $x_{16m}$ du point d'impact du faisceau réfléchi selon l'ordre 16 sur une règlette 5 perpendiculaire au faisceau incident 25, disposée à distance de la cavité 10, et plus précisément ici une distance D du réseau 11. On peut en effet écrire :

$$tg\alpha_{16m} = x_{16m}/D \qquad (7)$$

l'abcisse $x_{16m}$ étant mesurée à partir du faisceau 25. On calcule ensuite, en réponse à la valeur mesurée $\alpha_{16m}$, la valeur de l'angle $d\theta_i$ représentant l'erreur d'orientation du réseau 11 par rapport à son orientation idéale $\theta_i$.

Pour cela on part de la relation évidente :

$$\alpha_{16} = \theta_i - \theta_{16} \qquad (8)$$

d'où l'on tire :

$$\theta_i = \alpha_{16} + \theta_{16} \qquad (9)$$

En différenciant la relation (9) on trouve :

$$d\theta_i = d\alpha_{16} + d\theta_{16} \qquad (10)$$

Pour calculer $d\theta_{16}$, on différencie la relation (2), ce qui donne :

$$cos\theta_i \, d\theta_i + cos\theta_{16} \, d\theta_{16} = O \qquad (11)$$

d'où l'on tire :

$$d\theta_{16} = - d\theta_i \, cos \, \theta_i/cos \, \theta_{16} \qquad (12)$$

Le report de la relation (12) dans la relation (10) donne :

$$d\theta_i = d\alpha_{16} - d\theta_i \, cos\theta_i/cos\theta_{16} \qquad (13)$$

d'où l'on tire :

$$d\theta_i = d\alpha_{16}/(1 + cos\theta_i/cos\theta_{16}) \qquad (14)$$

Dans la relation 14, le terme $d\alpha_{16}$ représente la différence entre la valeur mesurée $\alpha_{16m}$ et la valeur idéale $\alpha_{16}$ qui serait celle obtenue si l'angle $\theta_i$ définissant l'orientation de réseau 11 avait lui aussi sa valeur idéale, égale dans l'exemple présenté à 52,58 degrés. Dans cet exemple, la valeur idéale $\alpha_{16}$ vaut :

$$\alpha_{16} = 6,14 \text{ degrés} \qquad (15)$$

Il vient donc :

$$d\theta_i = (\alpha_{16m} - \alpha_{16})/(1 + cos\theta_i/cos\theta_{16}) \qquad (16)$$

Compte tenu de la valeur faible de l'angle $\alpha_{16}$, la relation (7) peut s'écrire avec une bonne approximation :

$$\alpha_{16m} = x_{16m} / D \qquad (17)$$

et en posant :

$$\alpha_{16} = x_{16} / D \qquad (18)$$

la relation (16) devient :

$$d\theta_i = (x_{16m} - x_{16})/ D (1 + cos\theta_i/cos\theta_{16}) \qquad (19)$$

Lorsque l'erreur d'orientation $d\theta_i$ du réseau 11 a été calculée, on installe, au cours d'une étape représentée sur la figure 3b, la lame 12 et on l'oriente pour qu'elle s'écarte de son orientation idéale d'un angle égal à l'angle $d\theta_i$, en s'aidant du faisceau visible 25' qu'elle réfléchit lorsqu'elle reçoit le faisceau 25. L'orientation idéale de la lame 12 est celle dans laquelle elle est perpendiculaire au faisceau 25. Pour l'écarter de cette position de l'angle $d\theta_i$, il suffit d'agir sur les vis 120 de façon à ce que le faisceau 25' forme, avec le faisceau 25, un angle égal au double de l'angle $d\theta_i$.

Sur la règlette 5, on doit donc amener le point d'impact du faisceau 25' en un point d'abcisse dy tel que, $L_e$ étant la longueur du laser 1 mesurée entre le réflecteur 11 et la lame 12 :

$$tg2 \, d\theta_i = dy / (D - L_e) \qquad (20)$$

Compte tenu de la faible valeur de l'angle $d\theta_i$, la relation (20) peut s'écrire avec une bonne approximation :

$$2 \, d\theta_i = dy / (D - L_e) \qquad (21)$$

d'où l'on tire :

$$dy = 2 \, d\theta_i \, (D - L_e) \qquad (22)$$

En reportant la relation (19) dans la relation (22), on obtient l'expression de l'abcisse dy en fonction de l'abcisse mesurée $x_{16m}$ du point d'impact du faisceau réfléchi selon l'ordre 16 par le réseau :

$$dy = 2(x_{16m} - x_{16}) (D - L_e)/D(1 + cos\theta_i/cos\theta_{16}) \qquad (23)$$

Dans l'exemple présenté, avec D = 2m et $L_e$ = 0,3 m, la relation (23) devient :

$$dy = 0,90 (x_{16m} - x_{16}) \quad (24)$$

La relation (24) montre que la règlette 5 peut alors être graduée à la manière d'un abaque.

On peut alors retirer le laser 2, et remettre en place le diaphragme 102 et, dès que l'on excite le milieu contenu dans la cavité 10, le laser 1 oscille sans qu'une autre opération de réglage soit nécessaire.

Sur les figures, on n'a représenté, dans un souci de simplification, que deux vis 110, deux vis 120, et deux vis 40. En pratique, et comme un homme de métier peut le comprendre, chacun de ces groupes comprend au moins trois vis, de façon à permettre un réglage dans toutes les directions.

Naturellement, la portée de la présente demande n'est pas limitée à la description qui vient d'être faite. C'est ainsi que, dans l'exemple présenté, au lieu d'utiliser le faisceau réfléchi par le réseau selon l'ordre 16, on aurait pu utiliser le faisceau réfléchi selon l'ordre 17 afin de déterminer l'erreur d'orientation du réseau 11. De même, il n'est évidemment pas nécessaire d'utiliser un laser visible à l'hélium-néon, et tout laser visible peut convenir. Dans ce cas, N étant la partie entière du quotient de la longueur d'onde du laser à réaliser par la longueur d'onde du laser visible, on utilise le faisceau visible réfléchi selon l'ordre N, ou celui réfléchi selon l'ordre N+1, pour déterminer l'erreur d'orientation du réseau 11.

Dans le cas où le laser infra-rouge est un laser à $CO_2$ à 10,59 microns, on peut utiliser, comme laser visible, un laser hélium-cadmium HeCd, dont la longueur d'onde est 0,442 microns. Le rapport des deux longueurs d'onde est très proche de 24, ce qui rend l'alignement extrêmement précis, et utilisable pour le cas d'un laser de dimensions transverses réduites, comme un laser $CO_2$ à guide d'onde, car les faisceaux diffractés d'ordre 1 du laser à $CO_2$ et d'ordre 24 du laser HeCd sont pratiquement alignés, ce qui n'est pas le cas des faisceaux d'ordre 16 et 17 du laser HeNe.

Naturellement la lame semi-réfléchissante 12 peut être remplacée par tout dispositif réflecteur convenant à une telle utilisation.

## Revendications

1. Procédé d'alignement d'un laser (1) infra-rouge pourvu d'une cavité (10) renfermant un milieu excitable et des moyens réflecteurs (11, 12) disposés de part et d'autre de ladite cavité (10), procédé dans lequel on dirige le faisceau (25) d'un autre laser (2), émettant dans le visible, suivant un axe traversant ladite cavité (10) et lesdits moyens réflecteurs (11, 12), et on règle l'orientation desdits moyens réflecteurs (11, 12) en s'aidant des faisceaux visibles qu'ils réfléchissent alors, procédé caractérisé par le fait que, les moyens réflecteurs disposés d'un côté de la cavité étant un réseau optique (11) prévu pour réfléchir sensiblement sur lui-même et selon l'ordre de rang 1 le rayonnement infra-rouge du laser (1) à aligner :
- on mesure la valeur ($\alpha_{16m}$) de l'angle entre le faisceau (25) du laser visible (2) incident sur ledit réseau (11) et le faisceau visible réfléchi selon l'un des ordres N et N+1 qui en résulte, N étant la partie entière du quotient de la longueur d'onde du laser (1) à aligner par la longueur d'onde du laser visible (2),
- on calcule, en réponse à la valeur mesurée ($\alpha_{16m}$), la valeur ($d\theta_i$) d'un angle représentant l'erreur d'orientation du réseau (11) par rapport à son orientation idéale, et,
- on oriente les moyens réflecteurs (12) disposés du côté de la cavité opposé au réseau pour qu'ils s'écartent de leur orientation idéale d'un angle de valeur égale à celle ($d\theta_i$) représentant ladite erreur d'orientation, en s'aidant du faisceau visible (25') qu'ils réfléchissent.

2. Procédé selon la revendication 1, dans lequel pour mesurer la valeur ($\alpha_{16m}$) de l'angle entre le faisceau du laser visible (2) incident sur ledit réseau (11) et le faisceau réfléchi qui en résulte, on mesure l'abcisse ($x_{16m}$) du point d'impact du faisceau réfléchi sur une règlette (5) perpendiculaire au faisceau incident disposée à distance de la cavité (10), et, pour orienter les moyens réflecteurs (12) disposés du côté de la cavité opposé au réseau, on amène le point d'impact, sur ladite règlette (5), du faisceau visible (25') qu'ils réfléchissent en un point de ladite règlette dont l'abcisse (dy) est déterminée en réponse à ladite abcisse mesurée ($x_{16m}$).

3. Procédé selon l'une des revendications 1 ou 2, dans lequel le laser infra-rouge est un laser à $CO_2$ à 10,59 microns et le laser visible est un laser hélium-cadmium HeCd à 0,442 microns.

EP 0 397 569 A1

FIG.1

FIG.2

ART ANTERIEUR

FIG.3a

FIG.3b

EP 0 397 569 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | WO-A-8 707 093 (HUGHES AIRCRAFT CO.) <br> * Page 5, lignes 2-9; page 9, ligne 26 - page 11, ligne 21; page 13, lignes 7-10 * <br> ----- | 1-3 | H 01 S 3/086 |

DOMAINES TECHNIQUES RECHERCHES (Int. Cl.5)

H 01 S

**Le présent rapport a été établi pour toutes les revendications**

| Lieu de la recherche | Date d'achèvement de la recherche | Examinateur |
|---|---|---|
| LA HAYE | 22-08-1990 | GALANTI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)